# EUROPÄISCHE PATENTANMELDUNG

(11) **EP 0 715 993 A2**
(43) Veröffentlichungstag der Anmeldung: **12.06.1996**
(21) Anmeldenummer: 95119007.3
(22) Anmeldetag: 02.12.1995
(51) Int. Cl.: B60R 21/26

(54) **Hybrid-Gasgenerator für Sicherheitssysteme in Kraftfahrzeugen**

(30) Priorität: 08.12.1994 DE 4443680
(71) Anmelder: TEMIC Bayern-Chemie Airbag GmbH, D-84544 Aschau (DE)
(72) Erfinder: Bender, Richard, Dr., D-91207 Lauf (DE); Dölling, Uwe, D-84431 Heldenstein (DE); Herget, Christian, D-82380 Peissenberg (DE); Seidel, Harald, D-91233 Neunkirchen (DE); Vetter, Bernhard, D-83052 Bruckmühl (DE)
(74) Vertreter: Maute, Hans-Jürgen, Dipl.-Ing.

(57) **Zusammenfassung**

Es wird ein Hybrid-Gasgenerator für Sicherheitssysteme in Kraftfahrzeugen, insbesondere Airbag- und Gurtstraffersysteme oder pyrotechnische Trennschalter zur Trennung des Bordnetzes von der Kraftfahrzeugbatterie bei einem Auffahrunfall beschrieben, wo ein bewegbarer Kolben zum Zerstören der den Druckgasbehälter verschließenden Berstmembran vorgesehen ist. Dieser Kolben wird durch Zündung eines Treibsatzes in Richtung auf die Berstmembran zubewegt, wobei erfindungsgemäß dieser Kolben einen flanschförmigen Ansatz aufweist, der an einer Schulter auf der Innenfläche einer den Kolben aufweisenden Hülse anliegt und derart ausgebildet ist, daß bei Zündung des Treibsatzes dieser flanschförmige Ansatz abgeschert wird. In vorteilhafter Weise wird der Arbeitsdruck in der Brennkammer dieses erfindungsgemäßen Hybrid-Gasgenerators durch die Abscherfläche an dem flanschförmigen Ansatz bestimmt.

## Beschreibung

Die Erfindung betrifft einen Hybrid-Gasgenerator für Sicherheitssysteme in Kraftfahrzeugen gemaß dem Oberbegriff des Patentanspruches 1.

Ein solcher Hybrid-Gasgenerator ist aus der PCT-Anmeldung WO 93/11 973 bekannt, wo der in einer Treibgasauslaßhülse angeordnete bewegbare Kolben als Hohlkolben ausgebildet ist. Dieser Hohlkolben wird in einer Zentralbohrung der Treibgasauslaßhülse dadurch fixiert, daß mehrere Abscherbolzen senkrecht zur Bewegungsrichtung des Kolbens durch die Treibgasauslaßhülse bis in die Wandung des Hohlkolbens geführt sind. Durch Zündung des Treibsatzes erfährt der Hohlkolben aufgrund der erzeugten Treibgase eine Beschleunigung in Richtung der Berstmembran des Druckgasbehälters unter Abscherung der genannten Abscherbolzen. Der Hohlkolben und die Treibgasauslaßhülse sind so ausgebildet, daß der Hohlkolben in der Zentralbohrung der Treibgasauslaßhülse steckenbleibt, wenn von ihm die Berstmembran des Druckgasbehälters durchstoßen ist. Die dem Treibsatz zugewandte Stirnfläche des Hohlkolbens ist von einer Berstmembran verschlossen, die erst bei einem solchen in der Brennkammer aufgebauten Druck zerstört wird, der für die Abscherung der Bolzen ausreichend ist. Der hierfür erforderliche Druck wird durch entsprechende Ausgestaltung der den Hohlkolben verschließenden Berstmembran eingestellt, insbesondere mittels Sollbruchstellen.

In dieser o. g. Druckschrift ist ein weiterer Hybrid-Gasgenerator beschrieben, bei dem der Hohlkolben zur Zerstörung der Berstmembran des Druckgasbehälters nicht über Abscherbolzen in der Zentralbohrung der Treibgasauslaßhülse fixiert ist, sondern mittels einer weiteren Berstmembran realisiert wird. Diese als Scheibe ausgebildete Berstmembran schließt die dem Treibsatz zugewandte Stirnseite der Treibgasauslaßhülse ab und ist mit dieser über Schweißverbindungen verbunden. Gleichzeitig ist ebenfalls über Schweißverbindungen die Stirnfläche des Hohlkolbens mit dieser Berstmembran verbunden. Der Druck, bei dem diese scheibenförmige Berstmembran zerstört wird, wird ebenfalls durch entsprechende Ausbildung von Sollbruchstellen eingestellt.

Der Hohlkolben und die diesen aufnehmende Treibgasauslaßhülse sind so ausgebildet, daß nur ein Teil der Mantelfläche des Kolbens in Kontakt mit der Innenwand der Zentralbohrung steht. Und zwar weist nur der dem Treibsatz benachbarte Randbereich der Mantelfläche des Hohlkolbens einen Durchmesser auf, der dem Durchmesser der Zentralbohrung der Treibgasauslaßhülse entspricht. Ferner wird ein weiterer Kontaktbereich an der der Berstmembran des Druckgasbehälters gegenüberliegenden Öffnung der Treibgasauslaßhülse geschaffen, wo deren Durchmesser auf den Durchmesser des Hohlkolbens verengt ist. Nachteilig ist dabei, daß keine stabile Führung des Hohlkolbens in der Treibgasauslaßhülse sichergestellt ist.

Ferner ist bei dem bekannten Hybrid-Gasgenerator nachteilig, daß für die Treibgasauslaßhülse als auch für den bewegbaren Kolben ein komplizierter, viele Teile erforderlicher Aufbau vorgesehen ist, insbesondere zusätzlich eine weitere Berstmembran erforderlich ist, die den für die Bewegung des Hohlzylinders erforderlichen Druck sicherstellt.

Der Erfindung liegt daher die Aufgabe zugrunde, einen Hybrid-Gasgenerator der eingangs genannten Art anzugeben, der gegenüber den bekannten Hybrid-Gasgeneratoren einen einfacheren Aufbau aufweist und somit kostengünstiger herstellbar ist, ohne jedoch gegenüber dem Stand der Technik verschlechterte Eigenschaften aufzuweisen.

Diese Aufgabe wird durch die kennzeichnenden Merkmale des Patentanspruches 1 gelöst.

Hiernach weist der Kolben einen flanschförmigen Ansatz auf, der an einer Schulter auf der Innenfläche der Treibgasauslaßhülse anliegt und derart ausgebildet ist, daß bei Zündung des Treibsatzes der Kolben unter Abscherung des flanschförmigen Ansatzes in Richtung der Berstmembran des Druckgasbehälters bewegt wird und der Arbeitsdruck in der Brennkammer durch die Abscherfläche des flanschförmigen Ansatzes bestimmt wird.

Somit kann bei der Erfindung der für die Bewegung des Kolbens erforderliche Druck durch entsprechende Wahl der Abscherfläche des flanschförmigen Ansatzes eingestellt werden. Eine weitere Berstmembran zum Aufbau des erforderlichen Arbeitsdruckes ist daher nicht erforderlich.

Eine vorteilhafte Weiterbildung der Erfindung sieht vor, daß die Mantelfläche des Kolbens formschlüssig an der Innenfläche der Hülse anliegt, d. h., daß der äußere Durchmesser des Kolbens mit dem Durchmesser der Führungsbohrung des Kolbens übereinstimmt. Damit wird eine sichere Führung des Kolbens erzielt, so daß auch eine stabile Hubbewegung des Kolbens sichergestellt ist.

Bei einer weiteren vorteilhaften Weiterbildung der Erfindung ist der flanschförmige Ansatz im dem Treibsatz zugewandten Randbereich der Mantelfläche des Kolbens angeordnet, wobei eine Stabilisierungshülse zwischen dem Treibsatz und dem Kolben so angeordnet ist, daß sie den flanschförmigen Ansatz mit deren Hülsenrand abstützt. Durch diese Stabilisierungshülse wird die Ruhelage des Bolzens fixiert sowie die Größe des Brennraumes exakt definiert, da der dem Zündsatz benachbarte Hülsenrand eine den Treibsatz darstellende Anzündeinheit abstützt.

Um eine sichere Abdichtung des pyrotechnischen Treibsatzes gegenüber Umwelteinflüssen zu erreichen, wird bei einer weiteren Ausführungsform der Erfindung die der Berstmembran des Druckgasbehälters zugewandten Seite der Treibgasauslaßhülse mit einer Folie verschlossen, die bei Zündung des Treibsatzes ebenfalls von dem Kolben durchstoßen wird.

Schließlich sind weitere vorteilhafte Ausführungsformen der Erfindung den abhängigen Patentansprüchen zu entnehmen.

Im folgenden soll die Erfindung anhand von Ausführungsbeispielen im Zusammenhang mit den Zeichnungen dargestellt und erläutert werden. Es zeigen:
- Figur 1: eine Schnittdarstellung eines ersten Ausführungsbeispieles der Erfindung,
- Figur 2: eine Außenansicht des Ausführungsbeispieles nach Figur 1,
- Figur 3: eine Detaildarstellung eines zweiten Ausführungsbeispieles,
- Figur 4: eine Detaildarstellung eines dritten Ausführungsbeispieles und
- Figur 5: eine Detaildarstellung eines vierten Ausführungsbeispieles.

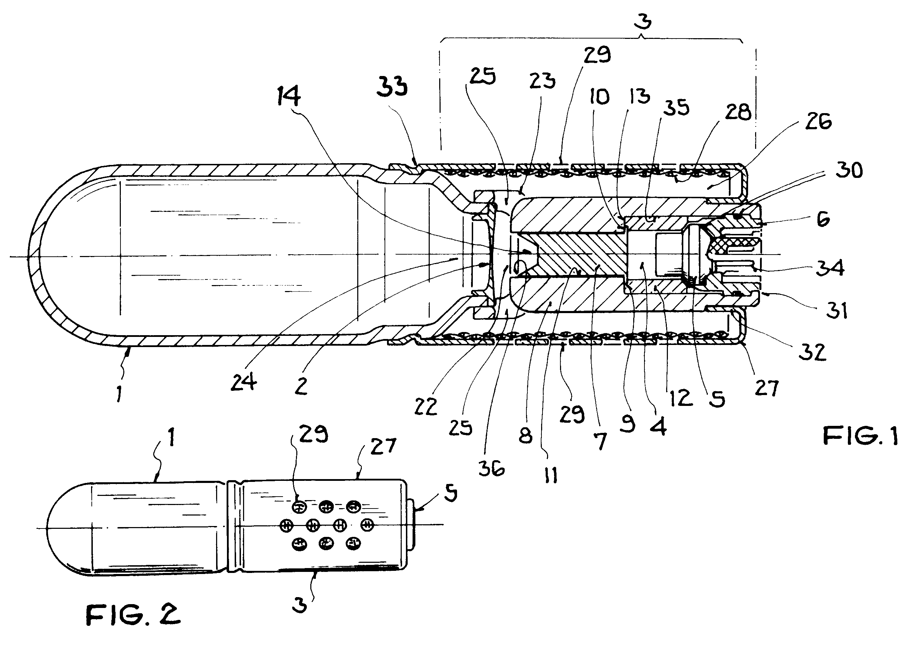

Der Hybrid-Gasgenerator nach Figur 1 besteht aus einem ersten Behälter, dem Druckgasbehälter 1 und einem zweiten Behälter, dem Treibgasbehälter 3. Dieser Treibgasbehälter 3 ist aus einer Treibgasauslaßhülse 8 mit einem diese Treibgasauslaßhülse 8 umschließenden Filterrohr 27 aufgebaut, wobei der Zwischenraum zwischen diesem Filterrohr 27 und der Treibgasauslaßhülse 8 eine Filterkammer 26 bildet. Eine Auslaßöffnung 24 des Druckgasbehälters 1 ist über einen Abstandshalter 23 mit der Treibgasauslaßhülse 8 verbunden, wobei diese Auslaßöffnung 24 von einer Berstmembran 2 verschlossen ist.

In der zentralen Bohrung der Treibgasauslaßhülse 8 ist ausgehend von der der Berstmembran 2 zugewandten Seite der Treibgasauslaßhülse 8 ein Kolben 7, eine Stabilisierungshülse 12 und eine den Treibsatz darstellende Anzündeinheit 5 angeordnet.

Im der Anzündeinheit 5 zugewandten Randbereich der Mantelfläche des Kolbens 7 ist ein ringförmiger Flansch 9 angeformt, so daß dieser Flansch 9 mit der entsprechenden Stirnfläche des Kolbens 7 eine ebene Fläche bildet. Die restliche Mantelfläche des Kolbens 7 liegt flächig an der Innenfläche der Führungsbohrung 11 der Treibgasauslaßhülse 8 an, d. h., daß in diesem Bereich der Durchmesser des Kolbens 7 dem Durchmesser der Bohrung 11 entspricht.

Unter Ausbildung einer Schulter 10 weitet sich die Führungsbohrung 11 auf eine Bohrung 35 auf, deren Durchmesser dem äußeren Durchmesser der Stabilisierungshülse 12 entspricht. Die Dicke des Mantels dieser Stabilisierungshülse 12 ist so gewählt, daß der flanschförmige Ansatz 9 des Kolbens 7 zwischen die Schulter 10 und den Hülsenrand 13 der Stabilisierungshülse 12 eingeklemmt wird. Der von der Innenfläche der Stabilisierungshülse 12 und den Stirnflächen des Kolbens 7 als auch der Anzündeinheit 5 gebildeten Raumbereich stellt eine Brennkammer 4 dar.

Die Anzündeinheit 5 wird mittels eines Halteringes 6 in der Zentralbohrung 35 mittels eines umlaufenden Wulstes derart fixiert, daß auf der innenliegenden Seite des Wulstes eine Stufe auf der Innenfläche der Bohrung 35 vorgesehen ist und die äußere Seite des Wulstes mittels eines stegförmigen Fortsatzes 31 der Treibgasauslaßhülse 8 umbördelt ist. Zur Zündung der Anzündeinheit 5 wird über Anschlußstecker 34 eine elektrische Spannung zugeführt. Zur Abdichtung der Brennkammer 4 ist sowohl zwischen der Anzündeinheit 5 und dem Haltering 6 als auch im Bereich des Wulstes im Umfangsbereich des Halteringes 6 jeweils ein Dichtring 30 vorgesehen. Die Anzündeinheit 5 entspricht einem elektrischen Anzünder, wie sie für bekannte, pyrotechnische Gasgeneratoren eingesetzt werden.

Bei Zündung der Anzündeinheit 5 baut sich aufgrund der erzeugten Treibgase in der Brennkammer 4 ein Druck auf, der bei einem bestimmten Wert zur Abscherung des flanschförmigen Ansatzes 9 an dem Kolben 7 führt und diesen in Richtung der Auslaßöffnung 24 des Druckgasbehälters 1 treibt. Die dem Druckgasbehälter 1 zugewandte Stirnfläche 14 des Kolbens 7 ist konvex mit einem kegelstumpfförmigen Querschnitt ausgebildet, so daß im Randbereich der Stirnfläche 14 eine Ringschneide 36 entsteht, die bei der beschriebenen Bewegung des Kolbens 7 zunächst eine die Bohrung 11 der Treibgasauslaßhülse 8 verschließende Folie 22 durchstößt und anschließend auch die die Auslaßöffnung 24 des Druckgasbehälters 1 verschließende Berstmembran 2 durchschlägt. Daraufhin strömt sowohl das Druckgas aus dem Druckgasbehälter 1 als auch das heiße Treibgas aus der Brennkammer 4 in den Zwischenraum zwischen dem Druckgasbehälter 1 und der Treibgasauslaßhülse 8 und vermischen sich dort. Dieses vermischte Gas strömt durch Gasauslaßöffnungen 25 in dem Abstandshalter 23 in die mit Filterelementen 28 versehene Filterkammer 26. Diese Filterelemente 28 sind vor den in dem Filterrohr 27 angeordneten Gasauslaßöffnungen 29 angebracht. Das Mischgas verläßt nach Durchtritt durch die Filterelemente 28 durch diese Gasauslaßöffnungen 29 das Filterrohr 27 und tritt in einen nicht dargestellten Gassack ein. Das Filterrohr 27 ist an seinem einen Ende mittels einer Umbördelung 33 mit dem Druckgasbehälter 1 verbunden und ist an seinem anderen Ende mit einem nach innen gerichteten Steg 32 versehen, der durch eine entsprechende Umkantung entstanden ist. Dieser Steg 32 bildet einen Ring, in den die Treibgasauslaßhülse 8 eingepreßt ist.

Die Gasauslaßöffnungen 29 in dem Filterrohr 27 sind auf diametral gegenüberliegenden Seiten des Filterrohres 27 angeordnet, wie dies im Zusammenhang mit Figur 2 zu erkennen ist.

Der in den Figuren 1 und 2 dargestellte und beschriebene Hybrid-Gasgenerator weist einen einfachen Aufbau auf und ist daher kostengünstig herzustellen.

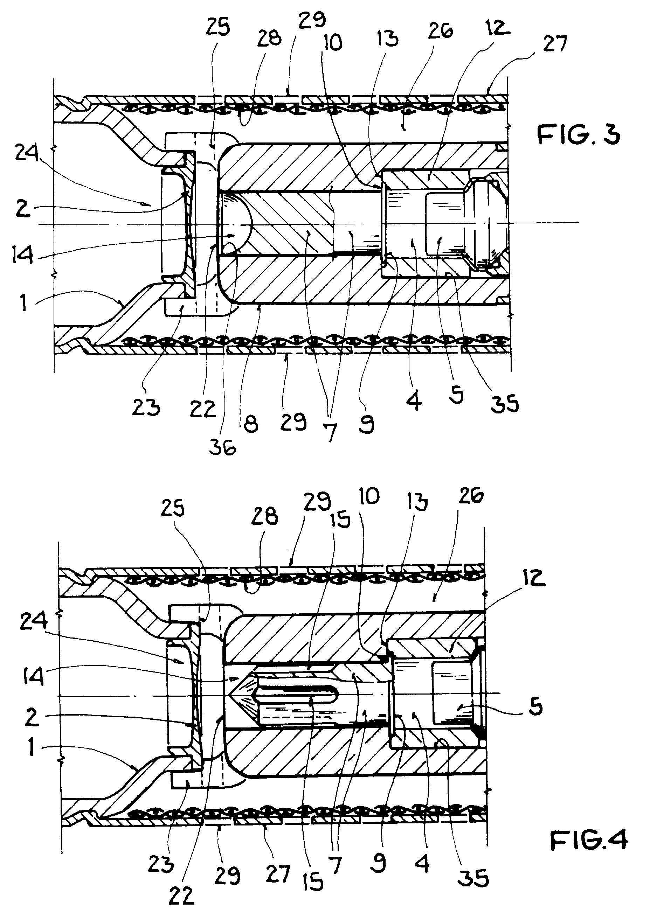

Das Ausführungsbeispiel nach Figur 3 unterscheidet sich von demjenigen nach Figur 1 nur durch eine andere Ausgestaltung des Kolbens 7. Die der Berstmembran 2 benachbarte Stirnseite 14 des Kolbens 7 ist ebenfalls konvex ausgebildet, doch mit einem halbkreisförmigen Querschnitt, so daß eine Ringschneide 36 entsteht.

Auch das Ausführungsbeispiel nach Figur 4 zeigt eine andere Ausgestaltung des Kolbens 7. Zunächst weist dieser Kolben 7 zum Durchstoßen der Dämmfolie 22 als auch der Berstmembran 2 eine Spitze 14 mit einem kegel- oder pyramidenförmigen Querschnitt auf. Ferner sind in dem der Berstmembran 2 benachbarten Bereich der Mantelfläche des Bolzens 7 kanalförmige Ausnehmungen 15 vorgesehen, die parallel zur Längsrichtung des Bolzens 7 verlaufen. Diese Ausnehmungen beginnen also im Randbereich der Spitze 14 und enden im mittleren Bereich der Mantelfläche des Kolbens 7. Damit wird erreicht, daß nach dem Durchstoßen der Berstmembran 2 zuerst kaltes Druckgas aus dem Druckgasbehälter 1 über die Ausnehmungen 15 in die Filterkammer 26 ausströmt, bevor heißes, von der Anzündeinheit 5 erzeugtes Treibgas nachströmt. Der Vorteil besteht darin, daß das Sackmaterial des Airbags einer geringeren thermischen Belastung ausgesetzt ist. Somit kann ein dünneres Sackmaterial eingesetzt werden, wodurch gegenüber den üblichen Airbags Kostenvorteile erzielbar sind.

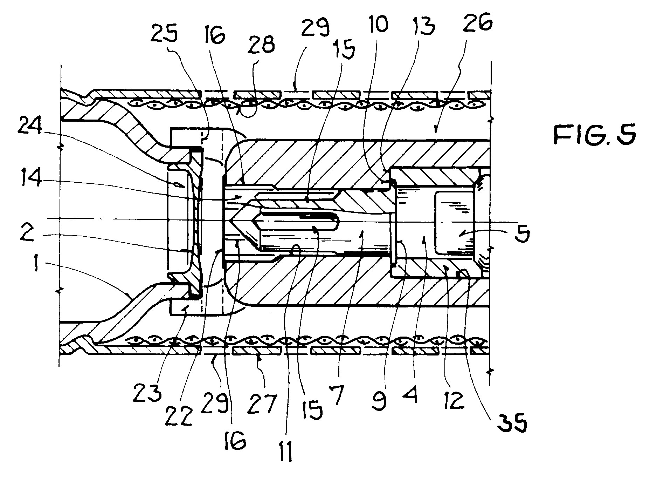

Das Ausführungsbeispiel nach Figur 5 unterscheidet sich von demjenigen nach Figur 4 dadurch, daß zusätzlich zu den kanalförmigen Ausnehmungen 15 in der Mantelfläche des Kolbens 7 parallel zu diesem auf der Innenfläche der Führungsbohrung 11 kanalförmige Ausnehmungen 16 vorgesehen sind. Diese Ausnehmungen 16 beginnen an der der Berstmembran 2 zugewandten Seite der Treibgasauslaßhülse 8 und weisen eine solche Länge auf, die höchstens dem Abstand zwischen der der Anzündeinheit 5 zugewandten Fläche des Kolbens 7 und dem ihr zugewandten Ende der Ausnehmungen 15 auf der Mantelfläche des Kolbens 7 entspricht. Damit wird erreicht, daß schon dann heißes, von der Anzündeinheit 5 erzeugtes Treibgas in die Gasauslaßöffnungen 25 eintritt, wenn sich noch der Kolben 7 im Führungskanal 11 der Treibgasauslaßhülse 8 befindet. Damit läßt sich der Mischungszeitpunkt des Druckgases aus dem Druckgasbehälter 1 mit dem, von der Anzündeinheit 5 erzeugten heißen Treibgas durch entsprechende Dimensionierung der Ausnehmungen 15 und 16 festlegen und gleichzeitig die Entfaltungszeit des Airbags einstellen. So kann insbesondere die Entfaltungszeit verkürzt werden, da aufgrund der zusätzlichen Ausnehmungen 16 der zeitliche Eintritt der heißen Gase in den Vermischungsraum im Bereich des Abstandshalters 23 zeitlich vorverlagert wird und dadurch eine Erhöhung des Aufblasdruckes eintritt.

Der erfindungsgemäße Hybrid-Gasgenerator kann für passive Insassenschutzsysteme, wie Airbag- und Gurtstraffersysteme eingesetzt werden und ist auch für Trennsicherheitsschalter einsetzbar, die bei einem die Sicherheitssysteme auslösenden Unfall das Bordnetz von der Kraftfahrzeugbatterie trennen.

## Patentansprüche

1. Hybrid-Gasgenerator für Sicherheitssysteme in Kraftfahrzeugen, bestehend aus
a) einem ersten Behälter (1) zur Aufnahme eines Druckgases, der von einer Berstmembran (2) verschlossen ist,
b) einem zweiten Behälter (3) mit einer Brennkammer (4) und einem elektrisch zündbaren Treibsatz (5), wobei
c) der zweite Behälter (3) eine Treibgasauslaßhülse (8) umfaßt, die einen bewegbaren Kolben (7) als Mittel zum Zerstören der Berstmembran (2) aufnimmt,
gekennzeichnet durch folgende Merkmale:
d) der Kolben (7) weist einen flanschförmigen Ansatz (9) auf, der an einer auf der Innenfläche der Treibgasauslaßhülse (8) angeordneten Schulter (10) anliegt und derart ausgebildet ist, daß bei Zündung des Treibsatzes (5) der Kolben (7) unter Abscherung des flanschförmigen Ansatzes (9) in Richtung der Berstmembran (2) bewegt wird und
e) der Arbeitsdruck in der Brennkammer (4) wird durch die Abscherfläche an dem flanschförmigen Ansatz (9) des Kolbens (7) bestimmt.

2. Hybrid-Gasgenerator nach Anspruch 1, dadurch gekennzeichnet, daß die Mantelfläche des Kolbens (7) formschlüssig an der Innenfläche der Treibgasauslaßhülse (8) anliegt.

3. Hybrid-Gasgenerator nach Anspruch 1 oder 2, dadurch gekennzeichnet, daß der flanschförmige Ansatz im dem Treibsatz (5) zugewandten Randbereich der Mantelfläche des Kolbens (7) angeordnet ist und daß ferner eine Stabilisierungshülse (12) vorgesehen ist, die zwischen dem Treibsatz (5) und dem Kolben (7) angeordnet ist und den flanschförmigen Ansatz (9) des Kolbens (7) mit deren Hülsenrand (13) abstützt.

4. Hybrid-Gasgenerator nach einem der vorangehenden Ansprüche, dadurch gekennzeichnet, daß die der Berstmembran (2) benachbarte Stirnfläche (14) des Kolbens (7) zur Ausbildung einer Ringschneide (36) konvex ausgebildet ist.

5. Hybrid-Gasgenerator nach einem der Ansprüche 1 bis 3, dadurch gekennzeichnet, daß die der Berstmembran (2) zugewandte Stirnfläche (14) des Kolbens (7) unter Ausbildung einer Spitze kegel- oder pyramidenförmig ausgebildet ist.

6. Hybrid-Gasgenerator nach einem der vorangehenden Ansprüche, dadurch gekennzeichnet, daß im der Berstmembran (2) benachbarten Randbereich der Mantelfläche des Kolbens (7) kanalförmige Ausnehmungen (15) in Richtung der Längsachse des Kolbens (7) angeordnet sind.

7. Hybrid-Gasgenerator nach Anspruch 6, dadurch gekennzeichnet, daß im der Berstmembran (2) benachbarten Randbereich der Innenfläche der Führungsbohrung (11) der Treibgasauslaßhülse (8) kanalförmige Ausnehmungen (16) in Längsrichtung des Kolbens (7) angeordnet sind.

8. Hybrid-Gasgenerator nach einem der vorangehenden Ansprüche, dadurch gekennzeichnet, daß die Öffnung der Treibgasauslaßhülse (8) auf der der Berstmembran (2) des ersten Behälters (1) zugewandten Seite mittels einer Folie (22) verschlossen ist.

9. Hybrid-Gasgenerator nach einem der vorangehenden Ansprüche, dadurch gekennzeichnet, daß zwischen der Auslaßöffnung (24) des ersten Behälters (1) und der Treibgasauslaßhülse (8) ein ringförmiger, Gasauslaßöffnungen (25) aufweisender Abstandshalter (23) vorgesehen ist.

10. Hybrid-Gasgenerator nach einem der vorangehenden Ansprüche, dadurch gekennzeichnet, daß die Treibgasauslaßhülse (8) von einer ringförmigen Filterkammer (26) umschlossen ist, in die das Druckgas aus dem Druckgasbehälter (1) als auch das von dem Treibsatz (5) erzeugte Treibgas einströmen.

11. Hybrid-Gasgenerator nach Anspruch 11, dadurch gekennzeichnet, daß die Filterkammer (26) mittels eines Filterrohres (27) mit Gasaustrittsöffnungen (29) gebildet wird.
